## Europäisches Patentamt
## European Patent Office
## Office européen des brevets

(19)

(11) Publication number: **0 170 368 B1**

(12) **EUROPEAN PATENT SPECIFICATION**

(45) Date of publication of patent specification: **02.05.91**   (51) Int. Cl.⁵: **H02P 5/40**

(21) Application number: **85303951.9**

(22) Date of filing: **04.06.85**

(54) Speed control apparatus for a synchronous motor.

(30) Priority: **05.06.84 JP 115340/84**

(43) Date of publication of application:
**05.02.86 Bulletin 86/06**

(45) Publication of the grant of the patent:
**02.05.91 Bulletin 91/18**

(84) Designated Contracting States:
**DE FR GB IT SE**

(56) References cited:
**EP-A- 0 085 541**
**EP-A- 0 089 673**
**DE-A- 2 734 430**
**FR-A- 2 451 657**
**GB-A- 1 046 983**

(73) Proprietor: **TOSHIBA KIKAI KABUSHIKI KAISHA**
**11-2, Ginza 4-chome Chuo-ku**
**Tokyo 104(JP)**

Proprietor: **TOEI DENKI KABUSHIKI KAISHA**
**9F Keikyu Daisan BLDG. 21-28, Takanawa 2-chome**
**Minato-Ku Tokyo 108(JP)**

(72) Inventor: **Ono, Tadahiro**
**200 Kadono Shuzenji-cho**
**Tagata-gun Shizuoka 410-24(JP)**
Inventor: **Miura, Naoshi**
**211-7 Nitta Kannami-cho**
**Tagata-gun Shizuoka 419-01(JP)**

(74) Representative: **Marsh, Roy David et al**
**Brewer & Son 5-9, Quality Court Chancery Lane**
**London WC2A 1HT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a speed control apparatus for an electric motor of the type utilizing alternating current in the armature, more specifically to an variable speed control apparatus for a synchronous motor of the type having a revolving magnetic field.

The synchronous motor of the type having a rotary magnetic field is provided with an armature defining a stator, and field poles defining a rotor. Multi-phase alternating current flowing in the stator windings of the motor generate revolving magnetic fields which cause the rotor to synchronously rotate by magnetic pulling forces acting on it. It is helpful for easily understanding of the invention to explain here the relationships of torques to be generated between a direct current (D.C) motor and a synchronous motor, prior to the description of the conventional speed control apparatus for the synchronous motor.

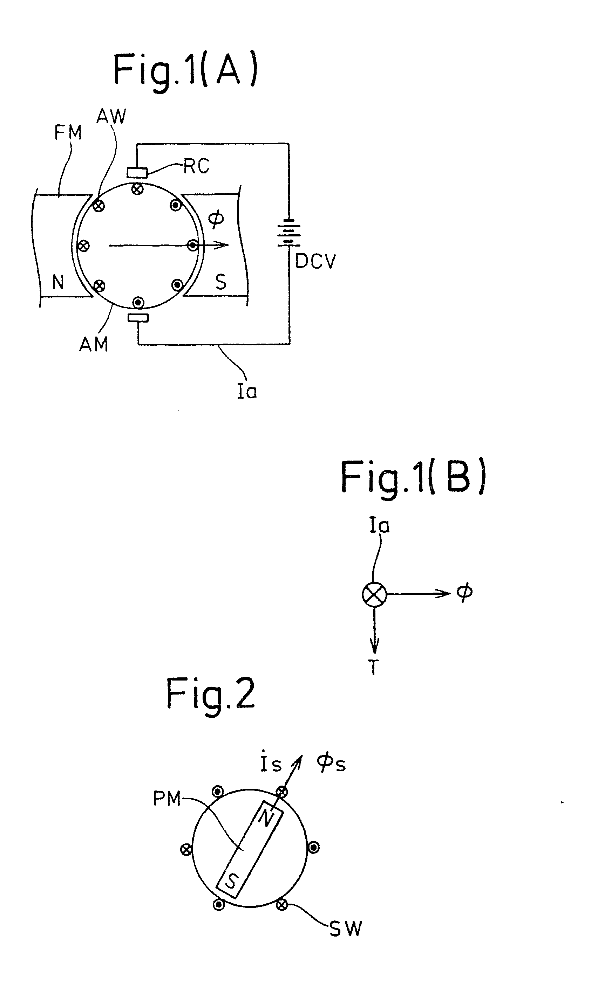

Figure 1A illustrates a sectional view on the rotation axis of a D.C motor, wherein FM are field poles, AM is an armature, AW are armature windings and, DCV is a direct current voltage source. FIG 1B illustrates Fleming's left hand law concerning armature current (Ia ), field or magnetic flux ( $\Phi$ ) and torque (T) to be generated on the D.C motor shown in FIG. 1A. As shown in FIGS. 1A and 1B, a rectifier RC switches armature current Ia so that it always flows in a direction perpendicular to that of magnetic flux $\Phi$ . In the case, the torque T to be generated is as follows;

$$T = K \cdot \phi \cdot Ia \qquad \cdots \cdots (1)$$

where K is a constant.

The equation (1) shows that torque T is in proportion to armature current Ia under the condition that the magnitude of magnetic flux $\Phi$ is kept to be constant.

FIG. 2 illustrates a sectional view on the rotation axis of a synchronous motor provided with rotary field magnetic poles PM, wherein "SW" designates stator windings and "Is" designates current vector flowing in the stator windings "SW". In order to apply the equation (1) to a synchronous motor provided with rotary field magnetic poles as shown in FIG. 2, it is necessary to correspond the magnetic flux $\Phi$ to the magnetic flux vector $\Phi$s of field poles PM, and further correspond armature current $\dot{I}$a to the current vector is of the stator windings SW. Accordingly, the torque T to be generated in the synchronous motor is given in the following equation (2);

$$T = K \cdot \phi s \cdot Is \cdot \cos \gamma \qquad \cdots \cdots (2)$$

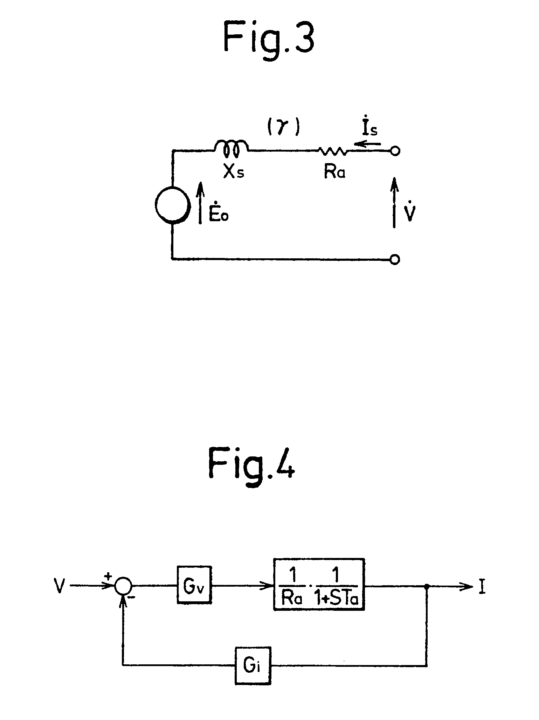

FIG. 3 illustrates an electric circuit equivalent to the synchronous motor shown in FIG. 2. In the figure, Ra designates an electric regristance of the stator (armature) windings, and Xs designates a reactance equivalent to the reaction and the leakage magnetic flux on the stator windings. Further, V is voltage source, and $\gamma$ is the phase difference between the armature current $\dot{I}$s and the electro motive force $\dot{E}$o induced on the stator windings by armature current.

Therefore, when the phase difference $\gamma$ is zero, that is, the electro motive force $\dot{E}$o is the same with the armature current $\dot{I}$s in the phases, the equation (2) becomes as followings;

$$T = K \cdot \phi s \cdot Is \qquad \cdots \cdots (3)$$

The equation (3) shows the possibility that the synchronous motor can be driven by the same fashions in torque generation with D.C motor.

In other words, the equation (3) indicates that it is necessary for efficiently driving of the synchronous motor to control the armature current Is flowing in the stator windings so as to make the revolving field magnetic flux $\Phi$s to be always in right angle with the armature current Is.

Furthermore, the armature current Is is defined as a function of first order lag to the rotary angular velocity $\omega$ of the synchronous motor, which includes a time constant Ta formed with electric regristance Ra and inductance La of the stator windings. Accordingly, it results in that the phase lag of the armature current is produced, as the rotation speed of the synchronous motor becomes high.

It is a conventional way to adopt a current control loop in the drive unit of the synchronous motor for making the phase lag smaller.

FIG. 4 illustrates a control block diagram corresponding to the drive unit of the motor. In the figure, Gv designates a gain of a current amplifier in the unit, and Gi designates a current feedback gain in the unit.

In FIG. 4, the transfer function G(s) of the unit is defined as follows;

$$G(s)=I/V=\frac{Gv\left(\frac{1}{Ra}\cdot\frac{1}{1+STa}\right)}{1+Gi\cdot Gv\left(\frac{1}{Ra}+\frac{1}{1+STa}\right)} \quad \cdots\cdots(4)$$

, where $S=j\omega$

Furthermore, open loop gain Go(s) is defined as follows;

$$Go(S)=Gi\cdot Gv/Ra(1+sTa) \quad \cdots\cdots\cdots(5)$$

In case of Go(S)≫1, therefore, the transfer function G(S) becomes as follows;

$$G(S)=1/Gi \quad \cdots\cdots\cdots\cdots(6)$$

The equation (6) indicates that the transfer function G(s) is independent on the time constant Ta and rotary angular velocity $\omega$ under the condition of Go(S)≫1. This is the reason why the current control loop is provided on the drive unit of the synchronous motor.

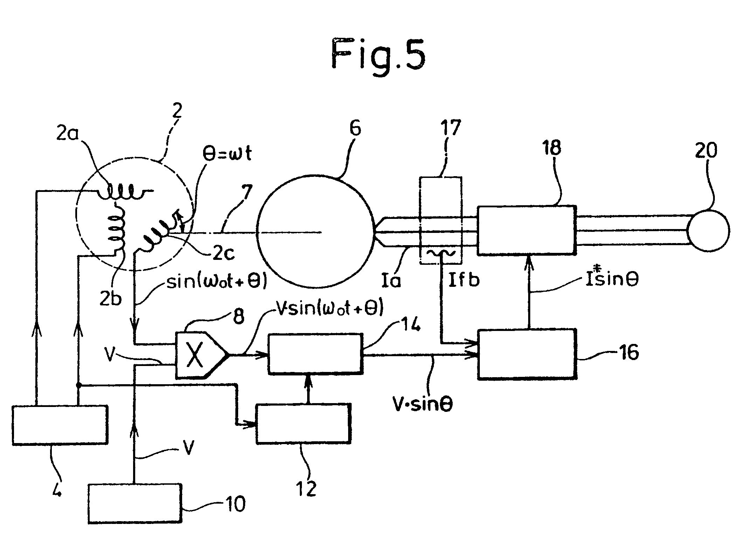

FIG. 5 illustrates a conventional type of control circuit block diagrams for drive control of a synchronous motor.

In the figure, reference numeral 2 designates a two phase resolver producing a phase modulated signal with respect to a rotary angle $\theta$ of a rotor 7 mounted on a synchronous motor 6, and reference numerals 2a, 2b are primary windings of resolver 2, each being COS windings and SIN windings to which sinusoidal wave signals cos $\omega$ot and sin $\omega$ot are applied from a reference signal generator 4, respectively. Reference numeral 2c is a secondary winding mounted on a rotor of resolver 6, the rotor being fixed on rotor 7 of motor 6. A signal Sin($\omega$ot + $\theta$) is produced on secondary windings 2c, as electromotive force generated between primary windings 2a, 2b and secondary windings 2c.

Reference numeral 8 is a multiplier for multiplying the output signal sin($\omega$ot + $\theta$) and an output signal V of a velocity instruction unit 10. Reference numeral 12 designates a wave shaper for shaping an output signal sin($\omega$ot) to a rectangular pulse trains.

Reference numeral 14 designates a synchronous rectifier circuit (or phase descriminating circuit) for synchronously rectifying an output signal V•sin($\omega$ot + $\theta$) of multiplier 8 with the rectangular wave signal from wave shaper 12. Reference numeral 16 is a current control loop for producing an control signal I*sin$\theta$ applied to a known power drive unit 18 formed with semiconductor devices. The current control loop 16 receives the signal V•sin$\theta$ and a current feed back signal $I_{fb}$ which is produced at a detecting unit 17 detecting a current actually flowing in the armature of motor 6. Reference numeral 20 designates an alternating power source.

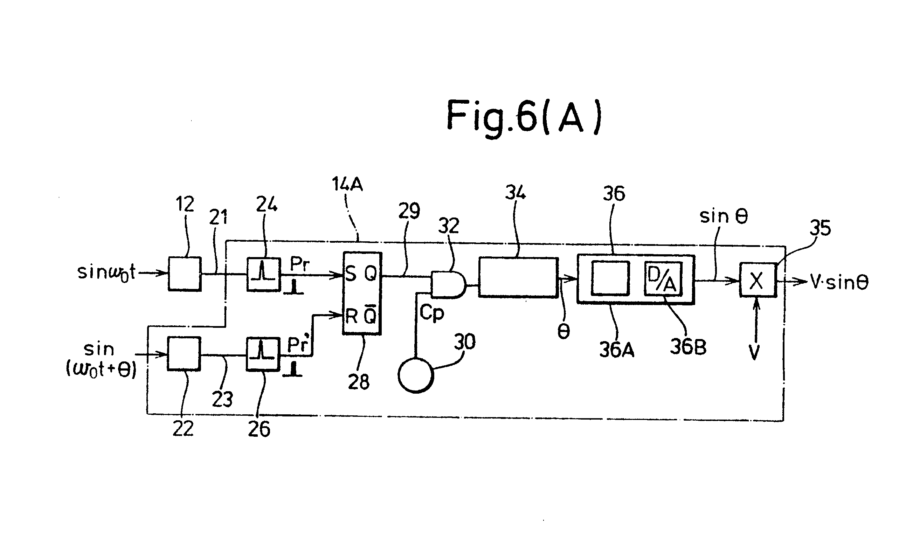

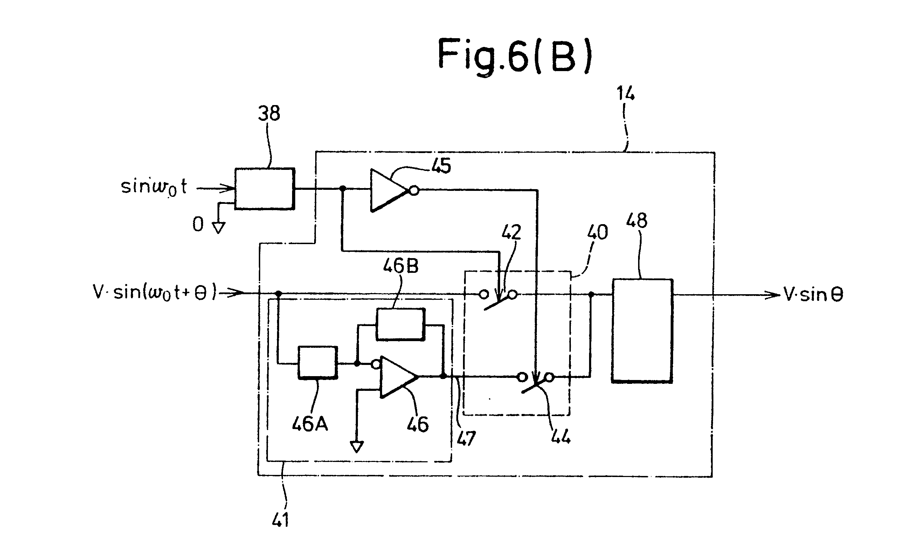

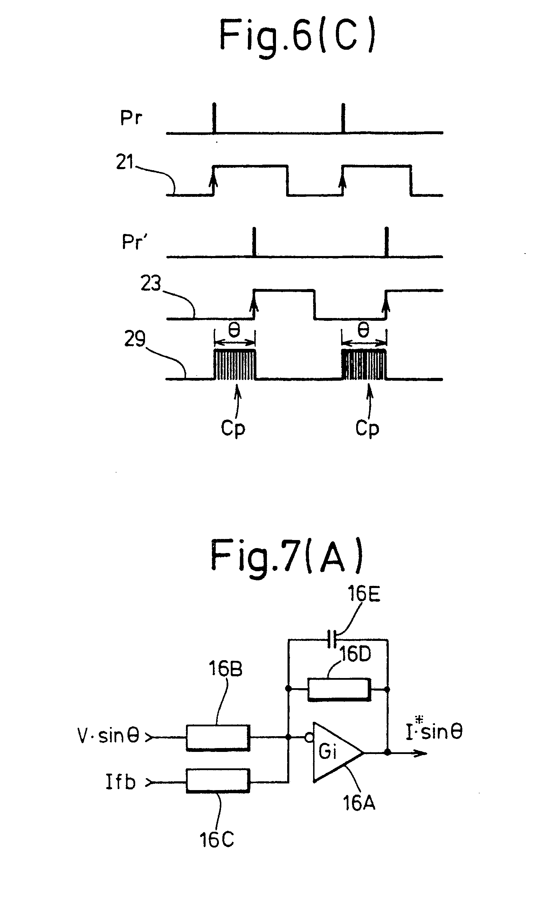

FIGS. 6A, 6B are detailed circuit block diagrams of synchronous rectifier 14 shown in FIG. 5, FIGS. 6A and 6B illustrating a digital and an analogue types of synchronous rectifiers, respectively.

As shown in FIG. 6A, a digital type of synchronous rectifier 14A is provided with a wave shaper 22 for forming a rectangular wave signal 23 from the signal sin($\omega$ot + $\theta$), a differentiator 24 for producing a pulse signal Pr by differentiating in time an output signal 21 of wave shaper 12 at a time corresponding to rising up of each output rectangular signal 21 as shown in FIG. 6C, another differentiator 26 for producing a pulse signal Pr' by differentiating in time output signal 23 of wave shaper 22 at a time corresponding to rising up of each signal 23 as shown in FIG. 6C, and a flip flop circuit 28 which is set by the pulse Pr and reset by the pulse Pr'. The synchronous rectifier 14A is further provided with an AND gate 32 which allows clock pulses Cp from a pulse generator 30 to pass when flip flop 28 is set, a counter 34 for counting the number of the clock pulses supplied from AND gate 32, and a converter 36 for producing a signal V•sin$\theta$ from the values of counter 34 and speed instruction signal V, the value of counter 34 corresponding to the phase difference $\theta$ between the reference signal sin $\omega$ot and a phase modulated signal sin($\omega$ot + $\theta$) by resolver 2, and converter 36 including a reference memory table 36A for referring to the values $\theta$ and converting it to sin$\theta$ and a digital to analogue converter 36B. A multiplier 35 for multiplying the speed instruction signal V and the signal sin$\theta$ is also provided.

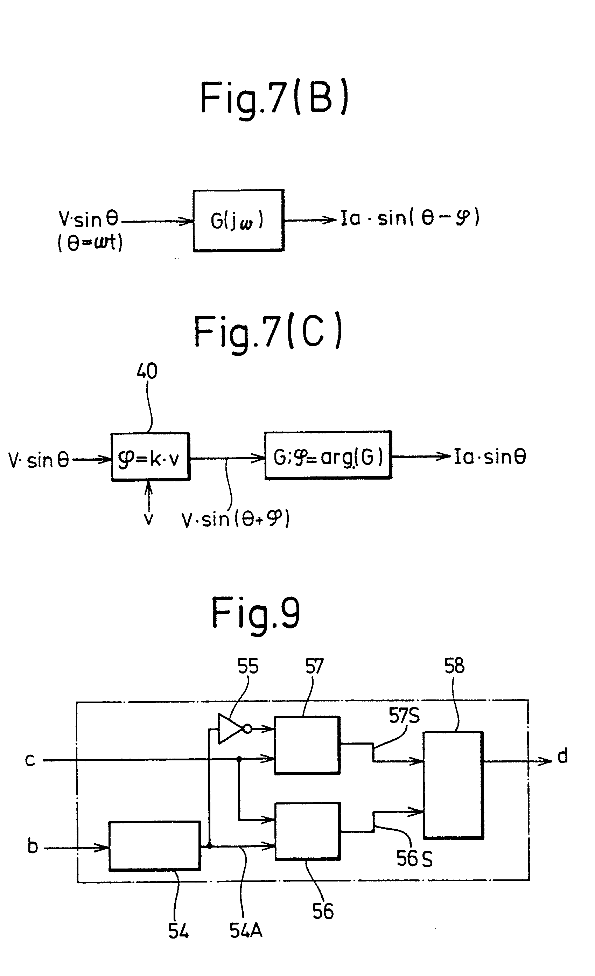

On the other hand, FIG. 6B illustrates an analogue type of synchronous rectifier 14. In the figure, reference numeral 38 is a wave shaper which output signal is logically inverted in a inverter 45 and applied to a switch 44 in analogue switch unit 40. Another output signal of wave shaper 38 is applied to a switch 42 in analogie switch unit 40. Switch 42 allows signal $V \cdot \sin(\omega ot + \theta)$ to pass to a low pass filter 48 which forms a signal $V \cdot \sin\theta$. Switch 44 allows inverted signal 47 of $V \cdot \sin(\omega ot + \theta)$, which is formed by an analogue invertor unit 41 having an operational amplifier 46, an input resistance 46A and an feed back resistance 46B, to pass to low pass filter 48. FIG. 7A illustrates circuit diagrams of current control loop 16 shown in FIG. 5. In the figure, reference numeral 16A is an operational amplifier having its gain Gi. Reference numerals 16B, 16C and 16D are electric registances. Reference numeral 16E is a capacitor.

Hereinafter, the functions and operations of circuit block diagrams shown in FIG. 5 will be explained.

In the figure, when rotor 7 rotatably mounted on synchronous motor 6 rotates at its angular velocity $\omega$ and its rotary angle becomes at an angle $\theta$ as shown in the figure, secondary windings 2C of resolver 2 produces a phase modulated signal $\sin(\omega ot + \theta)$. Multiplier 8 multiplies speed instruction signal V and the phase modulated signal $\sin(\omega ot + \theta)$, thereby producing the signal $V \cdot \sin(\omega ot + \theta)$. Synchronous rectifier 14 synchronously rectifiers the signal $V \cdot \sin(\omega ot + \theta)$ by a rectangular wave signal given from wave shaper 12, and produces the signal $V \cdot \sin\theta$ corresponding to the angular position of rotor 7.

Further, the signal $V \cdot \sin\theta$ and current feedback signal $I_{fb}$ are supplied to current control loop unit 16 which produces the control signal $I^* \sin\theta$ applied to semiconductor type of drive unit 18. In the unit 18, the signal $I^* \sin\theta$ is modified to multi phase alternative current signals, each phase signal being supplied to power inverting devices corresponding to each armature windings mounted on the stator of motor 6. So, each armature current makes a revolving magnetic field in motor 6. As mentioned above, since each armature current is supplied in accordance with the rotor's rotation angle $\theta$ equal to the direction of magnetic field in the motor, the phase difference between the directions of the magnetic flux $\Phi$ and each armature current can be held with right angle $\pi/2$.

However, as the rotation speed becomes high and the angular velocity $\omega$ becomes large values, the equation (5) does not hold. FIG. 7B shows a transfer function $G(j\omega)$ having frequency characteristics depending on the values of "$\omega$".

In the figure, the output signal $I_a \sin(\theta - \phi)$ includes a phase lag $\phi$ because of large values in rotary angular velocity $\omega$. In the case, $\phi$ is defined as the phase angle of the transfer function $G(j\omega)$, as follows;

$$\phi = \arg \cdot G(j\omega)$$

FIG. 7C is a general control block diagram for suggesting a basic technical concept for eliminating the phase lag $\phi$ indicated in FIG. 7B. In the figure 7C, a block 40 suggests a possibility of phase lag elimination by the way that the signal $V \cdot \sin\theta$ is operated with $\phi$ formed by motor's rotation speed v and a constant k, thereby the phase $\theta$ being advanced by the angle $\phi$.

Furthermore, as shown in FIG. 4 and FIG. 5, block element Gv corresponding to power amplifier in drive unit 18 has, in general, some delay circuit elements, thereby the total phase lag depending on rotary angular velocity $\omega$ becoming larger as much.

Therefore, in the conventional speed control apparatus for the synchronous motor shown in FIG. 5, a desired controlability cannot be obtained as the motor rotates at high speed because of generating phase differences between revolving magnetic field and armature current (Ia).

Japanese patent publication No 50-77814 discloses a control circuit for a synchronous motor in which the delay of the armature current is compensated by advancing the nominal pattern signal in accordance with the operating speed of the motor. Because the delay of the armature current is caused by the delay of the response of the control circuit, and also by the delay of the field current, the problem arises that the amount of advancement of the phase in the nominal pattern signal cannot be determined only by the operating speed of the synchronous motor.

In consequence, the synchronous motor of JP-A-50-77814 has the disadvantage that it is not able to operate accurately at a pre-set power factor.

DE-A- 2 734 430 discloses a control circuit for a synchronous motor with signal producing means for detecting an angular position, a phase difference detecting circuit, a phase control circuit connected to the output of the phase difference detecting circuit so as to provide a signal to the plane compensation device.

There is no teaching in this document of a rotational Speed signal producing means responsive to an angular portion to produce a signal corresponding to the Speed of the motor, which influences the phase compensation circuit.

Accordingly, it is a primary object of the present invention to provide a control apparatus for a synchronous motor in which revolving magnetic field with magnetic flux $\Phi$ and an armature current Ia are always controlled so as to be at right angles to each other, whereby a desired control can be obtained even at the high rotational speed range of the motor. Another object of the present invention is to provide a compensation device for compensating a phase lag of an armature current generated in the motor drive unit with current control loop.

According to the present invention there is provided a speed control apparatus for a synchronous motor comprising;

means for designating a rotational speed of the motor;

means for producing an angular position signal with respect to an angular position of a revolving magnetic field corresponding to that of a rotor on the motor; and

means for producing an armature current command signal in accordance with a speed instruction supplied from said speed designating means and said angular position signal supplied from said angular position signal producing means;

characterised by rotational speed signal producing means responsive to said angular position signal for producing a speed signal corresponding to the speed of said motor;

phase compensation means responsive to said speed signal for advancing a phase of said armature current commend signal with respect to the angular position of said rotor of the motor; and

means for producing a desired armature current on armature windings of the motor including a current control loop circuit responsive to said phase-advanced armature current command signal for outputting said desired armature current.

In the accompanying drawings;

Figure 1A is a sectional view on the axis of a direct current motor for explaining torque generation thereon;

Figure 1B illustrates relationships of directions among an armature current, a magnetic field and a torque;

Figure 2 is a sectional view on the axis of a synchronous motor of the type having a revolving magnetic field;

FIGURE 3 is a equivalent circuitry of the motor shown in FIG. 2;

FIGURE 4 is a general block diagram of transfer functions corresponding to a speed control system for a synchronous motor;

FIGURE 5 illustrates a block diagram of a conventional control circuitry for a synchronous motor;

FIGURE 6A illustrates a digital type of synchronous rectifier circuitry;

FIGURE 6B illustrates an analogue type of synchronous rectifier circuitry;

FIGURE 6C is a time chart of signals in FIG. 6A;

FIGURE 7A illustrates a circuitry of the current control loop;

FIGURE 7B is a block diagram of the transfer function corresponding to a power drive unit including a current control loop and armature windings for suggesting a presence of phase lags therein;

FIGURE 7C is a block diagram for suggesting a phase compensation by the present invention;

FIGURE 8 is a circuit block diagram of a speed control apparatus due to the present invention;

FIGURE 9 is a detailed circuit block diagram of a phase compensation circuit shown in FIG. 8;

FIGURE 10 illustrates time charts of each signal shown in FIG. 9; and

FIGURE 11 illustrates a circuit block diagram for producing a speed signal $\dot{\theta}(=\frac{d\theta}{dt})$ from a phase modulated signal Eo generated on a secondary winding of a two phase resolver.

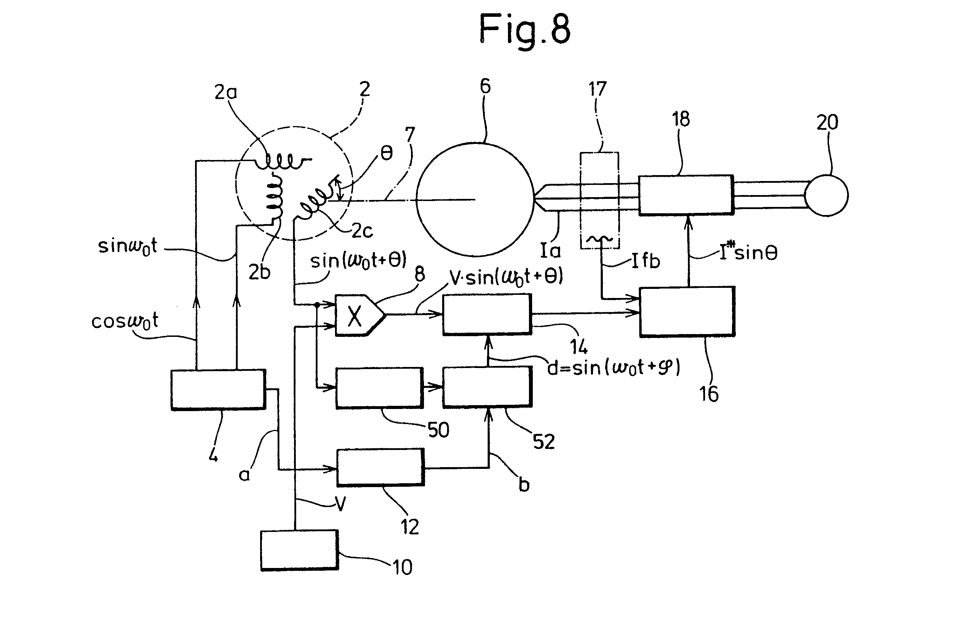

In FIG 8, reference numerals for elements corresponding to those shown in FIGURE 5 are same numbers.

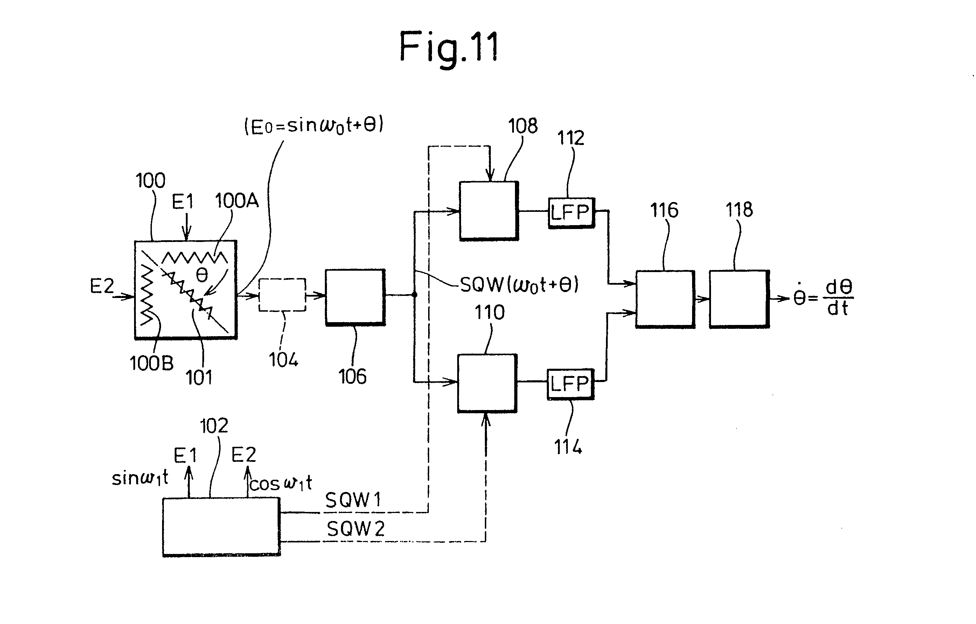

Referring to the figure 8, reference numeral 50 is a circuit in response to the phase modulated signal $\sin(\omega ot + \theta)$ of secondary windings 2c of resolver 2 for producing a speed signal "C" with respect to rotational speeds of rotor 7. As shown in figure 11, the circuit 50 comprises a wave shaper for forming a rectangular wave from the phase modulated signal $\sin(\omega ot + \theta)$, a synchronous rectifier, a low pass filter and a differentiator in time.

FIGURE 11 illustrates a circuit block diagram for producing a speed signal $\dot{\theta}(=\frac{d\theta}{dt})$ from a phase modulated signal Eo generated on a secondary winding 101 of a two phase resolver 100. In the figure, reference numeral 104 is a band pass filter, numeral 106 is a wave shaper, numerals 108 and 110 are synchronous rectifiers (or phase discriminators), numerals 112 and 114 are low pass filters, numeral 116 is a switching circuit and numeral 118 is a differentiator in time.

A signal $SQW(\omega ot + \theta)$ designates a signal from wave shaper 106 to be a square wave (rectangular wave) where $\omega o$ is an angular velocity supplied from a reference signal generator 102 which produces signals SQW1, and SQW2 for using as rectification reference signals to synchronous rectifiers 108 and 110, respectively.

Signal E1 ($= \sin\omega ot$) and E2 ($= \cos\omega ot$) generated in reference signal generator 102 are used as exciting signals supplied to primary windings 100A and 100B of resolver 100. More detailed circuit diagrams and its operations can be understood by referring to Japanese Patent publication numbers; 57-187659 and 57-187660 or U.S. serial number 363525.

Reference numeral 52 is a phase compensation circuit located between wave shaper 12 and synchronous rectifier 14, the phase compensation circuit being operated by the speed signal "c", the output of wave shaper 12 being defined as rectangular wave signal "b".

Reference signal generator 4 produces a signal "a" which is advancing by $\pi/2$ in its phase angles compared with the reference signal sin $\omega$ ot.

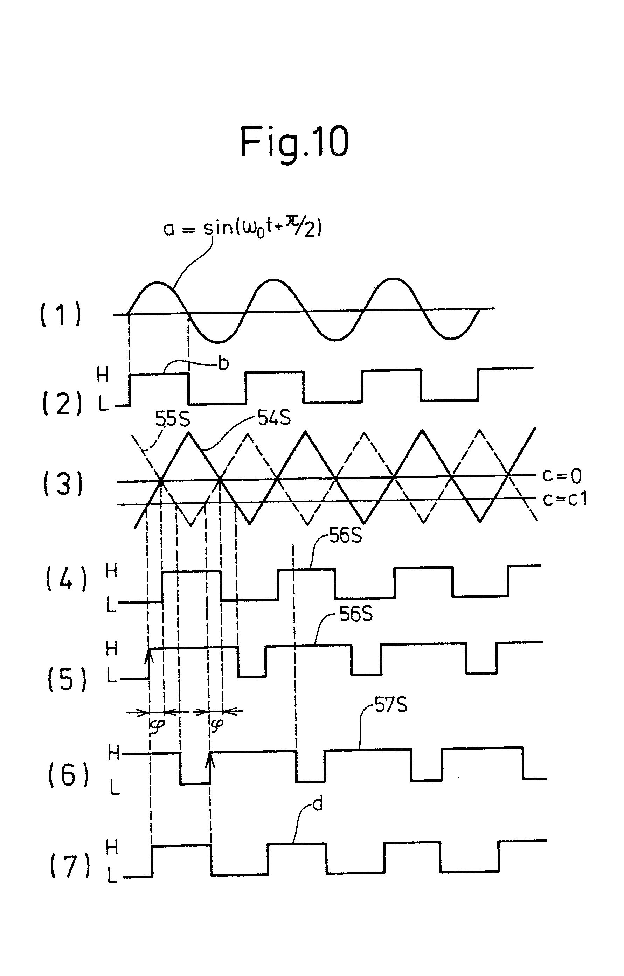

FIGURE 9 illustrates a detailed circuit block diagrams of phase compensation circuit 52 shown in FIG. 8, wherein reference numeral 54 is a integrator which integrates in time the rectangular wave signal "b" (referred to on the time chart (2) in FIG. 10) supplied from wave shaper 12, reference numeral 56 is a comparator for logically comparing the speed signal "c" with signal 54S given from integrator 54, both of the signals "c" and 54S being referred to on the time chart (3) in FIG. 10, and reference numeral 58 designates a logic operation circuit for instance, d-type flip flop for producing a signal "d" referred to on the time chart (7) in FIG. 10, which phase angles are advanced by "$\phi$" from signal "b". Comparators 56 and 57 produces signals 56S and 57S, respectively. More detailed process of logical operation will be seen in the following description of the time charts (4), (5), (6) and (7) in FIG. 10.

FIGURE 10 is a group of time charts (1) to (7), each showing signal waves in the phase compensation circuit 52.

Referring to FIGURE 10, the first time chart (1) shows the reference signal sin( $\omega$ot + $\pi/2$) supplied from reference signal generator 4.

The second time chart (2) shows the rectangular signal "b" corresponding to the reference signal sin( $\omega$ot + $\pi/2$).

The third time chart (3) shows the signal "c" with a straight line, the signal 54S with a triangular wave of real line, and the signal 55S with a triangle wave of broken line, respectively, the signal 54S (55S) with a triangle wave being formed as the result that the rectangular wave signal "b" is integrated in time.

The forth time chart (4) shows the signal 56S when the speed signal "c"=0, that is, when the signal 54S is larger than the speed signal "c"(=0), the logical value of the signal 56S becomes high. Also, it should be noted that the signal 56S under the speed signal C(=0) has a delay of phase difference $\pi/2$ compared with the signal "b".

The fifth time chart (5) shows the signal 56S. In case that the speed signal "c" equals to "Cl" as shown in the time chart (3), the logical value of the signal 56S becomes high (H) when the signal 54S is larger than the speed signal Cl.

The sixth time chart (6) shows the signal 57S under the condition that the speed signal "c" equals to Cl. In the case, the logical value of the signal 57S becomes high when the signal 55S is larger than the speed signal Cl. Also, it should be noted that the rising up time of signal 55S on the time chart (5) has a phase lead by $\phi$ compared with the rising up time of signal 56S on the time chart (4), and that the rising up time of signal 57S on the time chart (6) has also a phase progression by $\phi$ compared with the getting down time of signal 56S on the time chart (4).

The seventh time chart (7) shows the signal "d" which is an output signal of the phase compensation circuit 52 in FIG. 9, the signal "d" being defined as a signal with its logical value of high (H) only during the time intervals between the rising up time of signal 56S and that of signal 57S.

Functions and operations of the system illustrated in figure 8 will be explained as follows.

In the figure 8, when motor 6 rotates at the rotation speed $\dot{\theta}$ and a phase lag $\phi$ is generated in the drive unit, circuit 50 produces a speed signal "C" corresponding to the speed $\dot{\theta}$ and applies the signal "C" to phase compensation circuit 52. Phase compensation circuit 52 in turn produces from the signal "b" the rectangular signal "d" corresponding to a phase modulated signal sin( $\omega$ot + $\phi$ ), since the circuit 52 functions to advance the signal "b" by the phase angle $\phi$ in response to the speed signal "C".

Then, signal $V \cdot \sin(\omega$ ot + $\theta$ ) given from multiplier 8 is synchronously rectified by the signal "d" at synchronous rectifier 14, thereby a signal sin( $\theta + \phi$ ) being produced. Accordingly, since the input signal to current control loop circuit 16 is in advance progressed by phase angle $\phi$ corresponding to the phase lag in the current control loop, the output signal of current control loop 16 results in $I^* \sin \theta$, that is, phase lags generated on current control loop 16 can be cancelled.

In the case mentioned above, the amount $\phi$ of phase compensation is proportional to the values of angular velocity $\omega$ of synchronous motor 6 as shown in FIG. 7B.

In the strict meaning, however, an actual current feedback loop has an element with first order lag, and the amount $\phi$ of the phase compensation holds the following equation;

$$\phi = \text{arc tan } \omega \cdot Ta = \tan^{-1} \omega \cdot Ta \quad \cdots \cdots (7)$$

The equation (7) indicates that the amount $\phi$ is not strictly proportional to angular velocity $\omega$ of the motor,

but it is possible to approximate the relationship between "$\phi$" and "$\omega$" to a linear line except extremely large values of $\omega$ .

In case very strict accuracy for the relationships between $\phi$ and $\omega$ is required, it is possible to read out more accurate digital data $\phi$ corresponding to each measured angular velocity $\omega$ from a memory storing the relationships between $\phi$ and $\omega$ , that is, the equation (7).

Though in FIG. 8 speed signal C is produced by circuit 50 connected with the secondary windings 2C of resolver 2, a tachometer generator can be used instead of circuit 50. Though FIG. 8 discloses a control system for synchronous motor 6, the present invention is also applicable to speed control system for induction motor by frequency control of the primary windings, particularly for induction motors using the vector operation method.

In the vector operation method, as the induction motor rotates at very high speed, the phase difference between an armature current and a revolving magnetic field is under the influence of frequency characteristics of power drive unit including current control loop. Accordingly, the phase difference can be cancelled by using the phase compensation method disclosed in the present invention. It is possible for a person skilled in the art to adapt the circuits disclosed in FIG. 8 and 9 to a microprocessor system.

As mentioned before, it is an advantage of the present invention to be capable of driving a synchronous motor efficiently, because of always keeping the phase angles between the rotary magnetic field and the armature current of the motor to be $\pi$ /2 in a broad range of motor's rotation. It is another advantage of the invention to drive the synchronous motor without heat generation under high speed rotation. It is still another advantage of the present invention to drive the synchronous motor with quick response to the changing of speed instruction.

## Claims

1. A speed control apparatus for a synchronous motor comprising;
   means (10) for designating a rotational speed of the motor (6);
   means (2) for producing an angular position signal with respect to an angular position of a revolving magnetic field corresponding to that of a rotor (7) on the motor; and
   means for producing an armature current command signal in accordance with a speed instruction supplied from said speed designating means and said angular position signal supplied from said angular position signal producing means (2);
   characterised by rotational speed signal producing means (50) responsive to said angular position signal for producing a speed signal corresponding to the speed of said motor;
   phase compensation means (52) responsive to said speed signal for advancing a phase of said armature current command signal with respect to the angular position of said rotor of the motor; and
   means for producing a desired armature current on armature windings of the motor including a current control loop circuit (16) responsive to said phase-advanced armature current command signal for outputting said desired armature current.

2. A speed control apparatus for a synchronous motor as in claim 1, wherein said angular position signal producing means comprises a resolver (2) fixedly connected to the rotor (7) of said motor (6), said resolver producing a phase modulated signal as the angular position signal.

3. A speed control apparatus for a synchronous motor as in claim 1, wherein rotational speed signal producing means (50) comprises a tachometer generator.

4. A speed control apparatus for a synchronous motor as in claim 2, wherein said rotational speed signal producing means (50) comprises a circuit means which converts the phase modulated signal supplied from the resolver (2) into the speed signal.

5. A speed control apparatus for a synchronous motor as in claim 4, wherein said circuit means comprises a wave shaper (106) for forming a rectangular wave from the phase modulated signal, a synchronous rectifier (108, 110), a low pass filter (112, 114), a differentiator in time (118) and a switching circuit (116).

6. A speed control apparatus for a synchronous motor as in claim 2 or 4, wherein said armature current command signal producing means comprises a multiplier (8) for multiplying the phase modulated signal supplied from the resolver and the signal supplied from the speed designating means (10), a synchronous rectifier (14) for synchronously rectifying a signal supplied from the multiplier with a rectification reference signal supplied from the phase compensation device (52), and a reference signal generator (4) for generating a reference signal applied to said phase compensation device (52), said rectification reference signal advancing in phase by a phase angle corresponding to the difference in phase between said speed signal and said reference signal.

7. A speed control apparatus for a synchronous motor as in claim 2 or 4, wherein said armature current command signal producing means comprises a synchronous rectifier (14) for synchronously rectifying a phase modulated signal supplied from the resolver (2) with a rectification reference signal supplied from the phase compensation device (52), a reference signal generator (4) for generating a reference signal applied to said phase compensation device, and a multiplier (8) for multiplying a signal supplied from said rectifier (14) with a speed instruction signal of said speed designating means (10), said synchronous rectifier (14) further comprising a digital type of rectifier, and said rectification reference signal advancing said armature current command signal in phase by a phase angle corresponding to the difference in phase between said speed signal and said reference signal supplied from said reference signal generator (4).

8. A speed control apparatus for a synchronous motor as in claim 6, wherein said synchronous rectifier (14) is an analogue type of synchronous rectifier.

9. A speed control apparatus for a synchronous motor as in claim 6, wherein said reference signal generator (4) comprises a sinusoidal wave generator and a wave shaper.

10. A speed control apparatus for a synchronous motor as in claim 6 or claim 9, wherein said phase compensation device (52) comprises an integrator (54) for integrating in time said reference signal, a logical comparator (56) for comparing the speed signal with an output signal of the integrator, and a logical operation circuit (58).

**Revendications**

1. Un dispositif de régulation de vitesse pour moteur synchrone comprenant :
un moyen (10) d'assignation d'une vitesse de rotation au moteur (6) ;
un moyen (2) de production d'un signal de position angulaire par rapport à la position angulaire d'un champ magnétique tournant correspondant à celui d'un rotor (7) du moteur ; et
un moyen de production d'un signal de commande de courant d'induit en correspondance avec une consigne de vitesse fournie à partir dudit moyen d'assignation de vitesse et dudit signal de position angulaire fourni par ledit moyen de production de signal de position angulaire (2) ;
caractérisé par un moyen de production de signal de vitesse de rotation (50) sensible audit signal de position angulaire pour fournir un signal de vitesse correspondant à la vitesse dudit moteur ;
un moyen de compensation de phase (52) sensible audit signal de vitesse pour faire avancer une phase dudit signal de commande de courant d'induit par rapport à la position angulaire dudit rotor du moteur ; et
un moyen de production d'un courant d'induit désiré dans des enroulements d'induit du moteur, comprenant un circuit à boucle de régulation de courant (16) sensible audit signal de commande de courant d'induit avancé en phase pour délivrer ledit courant d'induit désiré.

2. Un dispositif de régulation de vitesse pour moteur synchrone selon la revendication 1, dans lequel ledit moyen de Production de signal de Position angulaire comprend un résolveur (2) calé au rotor (7) dudit moteur (6), ledit résolveur fournissant un signal à modulation de phase constituant le signal de position angulaire.

3. Un dispositif de régulation de vitesse pour moteur synchrone selon la revendication 1, dans lequel le moyen de production de signal de vitesse de rotation (50) comprend un générateur tachymétrique.

4. Un dispositif de régulation de vitesse pour moteur synchrone selon la revendication 2, dans lequel ledit

EP 0 170 368 B1

moyen de production de signal de vitesse de rotation (50) comprend un moyen à circuit qui convertit le signal à modulation de phase fourni par le résolveur (2) en le signal de vitesse.

5. Un dispositif de régulation de vitesse pour moteur synchrone selon la revendication 4, dans lequel ledit moyen à circuit comprend un conformateur de signaux (106) propre à former un signal rectangulaire à partir du signal à modulation de phase, un démodulateur synchrone (108, 110), un filtre passe-bas (112, 114), un différentiateur temporel (118) et un circuit de commutation (116).

6. Un dispositif de régulation de vitesse pour moteur synchrone selon la revendication 2 ou 4, dans lequel ledit moyen de production de signal de commande de courant d'induit comprend un multiplicateur (8) propre à multiplier le signal à modulation de phase fourni par le résolveur et le signal fourni par le moyen d'assignation de vitesse de rotation (10), un démodulateur synchrone (14) propre à assurer la démodulation synchrone d'un signal fourni par le multiplicateur avec un signal de référence de démodulation fourni par le moyen de compensation de phase (52), et un générateur de signal de référence (4) propre à générer un signal de référence appliqué audit moyen de compensation de phase (52), ledit signal de référence de démodulation ayant une avance de phase dont l'angle correspond à la différence de phase entre ledit signal de vitesse et ledit signal de référence.

7. Un dispositif de régulation de vitesse pour moteur synchrone selon la revendication 2 ou 4, dans lequel ledit moyen de production de signal de commande de courant d'induit comprend un démodulateur synchrone (14) propre à assurer la démodulation synchrone d'un signal à modulation de phase fourni par le résolveur (2) avec un signal de référence de démodulation fourni par le moyen de compensation de phase (52), un générateur de signal de référence (4) propre à générer un signal de référence appliqué audit moyen de compensation de phase, et un multiplicateur (8) propre à multiplier un signal fourni par ledit démodulateur (14) par un signal de consigne de vitesse dudit moyen d'assignation de vitesse (10), ledit démodulateur synchrone (14) étant en outre de type numérique et ledit signal de référence de démodulation faisant avancer la phase dudit signal de commande de courant d'induit d'un angle de phase correspondant à la différence de phase entre ledit signal de vitesse et ledit signal, de référence fourni par ledit générateur de signal de référence (4).

8. Un dispositif de régulation de vitesse pour moteur synchrone selon la revendication 6, dans lequel ledit démodulateur synchrone (14) est un démodulateur synchrone de type analogique.

9. Un dispositif de régulation de vitesse pour moteur synchrone selon la revendication 6, dans lequel ledit générateur de signal de référence (4) comprend un générateur de signaux sinusoïdaux et un conformateur de signaux.

10. Un dispositif de régulation de vitesse pour moteur synchrone selon la revendication 6 ou la revendication 9, dans lequel ledit moyen de compensation de phase (52) comprend un intégrateur (54) propre à intégrer dans le temps ledit signal de référence, un comparateur logique (56) propre à comparer le signal de vitesse avec un signal de sortie de l'intégrateur et un circuit opérateur logique (58).

## Ansprüche

1. Drehzahlregelvorrichtung für einen Synchronmotor, die aufweist:
   Mittel (10), zur Kennzeichnung einer Drehzahl des Motors (6);
   Mittel (2) zur Erzeugung eines Winkellagesignals bezüglich einer Winkellage eines umlaufenden Magnetfeldes, die jener eines an dem Motor vorgesehenen Rotors (7) entspricht; und
   Mittel zur Erzeugung eines Ankerstrom-Führungssignals entsprechend einem von den Drehzahlkennzeichnungsmitteln zugeführten Drehzahlbefehl und dem von den Winkellage-Signalerzeugungsmitteln (2) zugeführten Winkellagesignal;
   gekennzeichnet durch
   von dem Winkellagesignal beeinflußte Drehzahlsignalerzeugungsmittel (50) zur Erzeugung eines der Drehzahl des Motors entsprechenden Drehzahlsignals;
   von diesem Drehzahlsignal beeinflußte Phasenkompensationsmittel (52) zum Vordrehen einer Phasenlage des Ankerstrom-Führungssignals bezüglich der Winkellage des Rotors des Motors; und
   Mittel zur Erzeugung eines gewünschten Ankerstroms in den Ankerwicklungen des Motors, die eine von dem in der Phase vorgedrehten Ankerstrom-Führungssignal beeinflußte Stromregelkreis-Schaltung (16) aufweisen, um den gewünschten Ankerstrom abzugeben.

2. Drehzahlregelvorrichtung für einen Synchronmotor nach Anspruch 1, bei der die Mittel zur Erzeugung des Winkellagesignals einen mit dem Rotor (7) des Motors (6) starr verbundenen Drehmelder (2) aufweisen, wobei der Drehmelder ein das Winkellagesignal bildendes, phasenmoduliertes Signal erzeugt.

3. Drehzahlregelvorrichtung für einen Synchronmotor nach Anspruch 1, bei der die Mittel (50) zur Erzeugung des Drehzahlsignals einen Tachogenerator aufweisen.

4. Drehzahlregelvorrichtung für einen Synchronmotor nach Anspruch 2, bei der die Mittel (50) zur Erzeugung des Drehzahlsignals Schaltungsmittel aufweisen, durch die das von dem Drehmelder (2) zugeführte, phasenmodulierte Signal in das Drehzahlsignal umgewandelt wird.

5. Drehzahlregelvorrichtung für einen Synchronmotor nach Anspruch 4, bei der die Schaltungsmittel aufweisen:
einen Wellenformer (Funktionsgenerator) (106), um aus dem phasenmodulierten Signal eine Rechteckwelle zu bilden, einen Synchrongleichrichter (108, 110), ein Tiefpaßfilter (112, 114), eine nach der Zeit differenzierende Einrichtung (118) und ein Umschaltnetzwerk (116).

6. Drehzahlregelvorrichtung für einen Synchronmotor nach Anspruch 2 oder 4, bei der die Mittel zur Erzeugung des Ankerstrom-Führungssignals aufweisen: einen Multiplizierer (8), um das von dem Drehmelder zugeführte, phasenmodulierte Signal mit dem von den Drehzahlkennzeichnungsmitteln (10) zugeführten Signal zu multiplizieren, einen Synchrongleichrichter (10), um ein von dem Multiplizierer zugeführtes Signal synchron mit einem von den Phasenkompensationsmitteln(52) zugeführten Gleichrichtungsbezugssignal gleichzurichten, und einen Bezugssignalgenerator (4), um ein den Phasenkompensationsmitteln (52) zugeführtes Bezugssignal zu erzeugen, wobei das Gleichrichtungsbezugssignal in seiner Phase um einen Phasenwinkel voreilt, der der Phasenwinkeldifferenz zwischen dem Drehzahlsignal und dem Bezugssignal entspricht.

7. Drehzahlregelvorrichtung für einen Synchronmotor nach Anspruch 2 oder 4, bei der die Mittel zur Erzeugung des Ankerstrom-Führungssignals aufweisen: einen Synchrongleichrichter (14), um ein von dem Drehmelder (2) zugeführtes, phasenmoduliertes Signal synchron mit einem von den Phasenkompensationsmitteln (52) zugeführten Gleichrichtungsbezugssignal gleichzurichten, einen Bezugssignalgenerator (4), um ein den Phasenkompensationsmitteln zugeführtes Bezugssignal zu erzeugen, und einen Multiplizierer (8), um ein von dem Gleichrichter (14) zugeführtes Signal mit einem Drehzahlbefehlssignal der Drehzahlkennzeichnungsmittel (10) zu multiplizieren, wobei der Synchrongleichrichter (14) außerdem einen digitalen Gleichrichter aufweist und das Gleichrichtungsbezugssignal das Ankerstrom-Führungssignal in der Phase um einen Phasenwinkel vordreht, der der Phasenwinkeldifferenz zwischen dem Drehzahlsignal und dem von dem Bezugssignalgenerator (4) zugeführten Bezugssignal entspricht.

8. Drehzahlregelvorrichtung für einen Synchronmotor nach Anspruch 6, bei der der Synchrongleichrichter (14) ein Synchrongleichrichter analoger Bauart ist.

9. Drehzahlregelvorrichtung für einen Synchronmotor nach Anspruch 6, bei der der Bezugssignalgenerator (4) einen Sinuswellengenerator und einen Wellenformer (Funktionsgenerator) aufweist.

10. Drehzahlregelvorrichtung für einen Synchronmotor nach Anspruch 6 oder 9, bei der die Phasenkompensationsmittel (52) aufweisen: einen Integrator (54), um das Bezugssignal über die Zeit zu integrieren, einen logischen Vergleicher (56), um das Drehzahlsignal mit einem Ausgangssignal des Integrators zu vergleichen,und eine logische Verknüpfungsschaltung (58).

# Fig.1(A)

# Fig.1(B)

# Fig.2

# Fig.3

# Fig.4

# Fig.5

EP 0 170 368 B1

# Fig.6(A)

Fig.6(B)

# Fig.6(C)

Pr

21

Pr'

23

29

$\theta$

$\theta$

Cp

Cp

# Fig.7(A)

16E

16D

16B

$V \cdot \sin\theta$

16C

Ifb

Gi

16A

$I^{\#} \cdot \sin\theta$

# Fig.7(B)

$$V \cdot \sin \theta \longrightarrow \boxed{G(j\omega)} \longrightarrow Ia \cdot \sin(\theta - \varphi)$$
$$(\theta = \omega t)$$

# Fig.7(C)

$$V \cdot \sin \theta \longrightarrow \underset{40}{\boxed{\varphi = k \cdot v}} \longrightarrow \boxed{G; \varphi = arg(G)} \longrightarrow Ia \cdot \sin \theta$$

$$v \uparrow \qquad V \cdot \sin(\theta + \varphi)$$

# Fig.9

# Fig.8

$\sin w_0 t$

$\cos w_0 t$

$\sin(w_0 t + \theta)$

$V \cdot \sin(w_0 t + \theta)$

$I_a$

$I_{fb}$

$I^{\#}\sin\theta$

$d = \sin(w_0 t + \varphi)$

EP 0 170 368 B1

## Fig.10

$a = \sin(\omega_0 t + \pi/2)$

(1)

(2) H L — b

55S 54S

(3) c = 0, c = c1

56S

(4) H L

56S

(5) H L

$\varphi$ $\varphi$

57S

(6) H L

d

(7) H L

# Fig.11